# EUROPÄISCHE PATENTANMELDUNG

(11) **EP 4 521 631 A1**
(43) Veröffentlichungstag der Anmeldung: **12.03.2025**
(21) Anmeldenummer: 24163951.7
(22) Anmeldetag: 15.03.2024
(51) Int. Cl.: H02S 20/00, F24S 25/33

(54) **PHOTOVOLTAIKMODUL, PHOTOVOLTAIKANLAGE, BAUWERK UND VERFAHREN**

(30) Priorität: 07.09.2023 DE 202023001902 U; 07.09.2023 DE 202023001903 U
(71) Anmelder: Seybold Technische Konfektionen GmbH & Co. KG, 52349 Düren (DE)
(72) Erfinder: SEYBOLD, Bernd, 52372 Kreuzau (DE); MOCK, Jan, 53121 Bonn (DE)
(74) Vertreter: Paul & Albrecht Patentanwälte PartG mbB

(57) **Zusammenfassung**

Die vorliegende Erfindung betrifft ein Photovoltaikmodul, welches seitlich angebrachte Eingriffsprofile aufweist. Ferner betrifft die Erfindung ein Bauwerk und eine Photovoltaikanlage.

## Beschreibung

Die vorliegende Erfindung betrifft ein Photovoltaikmodul. Ferner betrifft die Erfindung eine Photovoltaikanlage, und ein Verfahren zum Anbringen eines Photovoltaikmoduls an einem Bauwerk. Schließlich betrifft die Erfindung ein Bauwerk, umfassend ein Dach, insbesondere ein Membrandach, bevorzugt ein textiles Membrandach.

Für das Gelingen der Energiewende, d. h. das Umstellen auf erneuerbare Energieerzeugung spielt Sonnenenergie eine wichtige Rolle. Photovoltaikanlagen ermöglichen das Umsetzen von Sonnenstrahlen in elektrische Energie. In besonderem Maße werden zunehmend Photovoltaikanlagen auf Dächern von Gebäuden angebracht. Diese umfassen zumeist eine Vielzahl von Photovoltaikmodulen, die nebeneinander auf entsprechenden Trägerprofilen, welche mit dem Dach des Gebäudes verbunden sind, montiert werden. Der mit solchen Photovoltaikanlagen erzeugte Strom kann im Gebäude selbst verbraucht werden oder in das Stromnetz eingespeist werden.

Photovoltaikmodule, welche auf Dächern von massiven Gebäuden angebracht werden, sind zumeist unflexibel und besitzen eine Metallunterkonstruktion. An dieser Metallunterkonstruktion sind dann Solarzellen befestigt, beispielsweise kristalline Silizium-Solarzellen, welche das Sonnenlicht in elektrischen Strom umsetzen. Die Oberseite der Solarzellen ist üblicherweise mit einer Glasplatte überdeckt, um die Solarzellen vor Umgebungseinflüssen zu schützen. Derartige Photovoltaikmodule besitzen zwar eine hohe Festigkeit, sind allerdings auch entsprechend schwer, weswegen sie für Leichtbauhallen oder Zelte aus statischen Gründen allenfalls eingeschränkt geeignet sind.

Solche Leichtbauhallen gewinnen allerdings zunehmend an Bedeutung und werden gerade in Industriegebieten, in welchen schnell eine Halle errichtet werden muss, beispielsweise um Produktionsanlagen unterzubringen, zunehmend eingesetzt. Üblicherweise besitzen solche Leichtbauhallen eine Tragstruktur aus Stahl- oder Aluminiumträgern und an dieser Tragstruktur befestigte Wände sowie ein auf dieser Tragstruktur aufliegendes Dach. Solche Dächer können aus einer ein- oder mehrlagigen Membran bestehen. In diesem Fall spricht man auch von Membrandächern. Beispielsweise können solche Dächer nach der DIN 18204 ausgeführt sein. Eine übliche Dachneigung kann hierbei 18° betragen.

Vor diesem Hintergrund besteht die Aufgabe der vorliegenden Erfindung darin, ein alternatives Photovoltaikmodul zu schaffen, welches insbesondere leicht ist und sich insbesondere auf einfache Weise an Dächern befestigen lässt. Ferner soll die vorliegende Erfindung eine alternative Photovoltaikanlage und ein alternatives Bauwerk schaffen. Schließlich soll die vorliegende Erfindung ein Verfahren zum Befestigen eines Photovoltaikmoduls an einem Bauwerk schaffen.

Diese Aufgabe ist gemäß einem ersten Aspekt der Erfindung bei einem Photovoltaikmodul der eingangs genannten Art bevorzugt dadurch gelöst, dass dieses seitlich angebrachte Eingriffsprofile aufweist. Bei einem Bauwerk der eingangs genannten Art ist diese Aufgabe dementsprechend bevorzugt dadurch gelöst, dass dieses Gegenprofile aufweist, die an einer Oberseite des Daches angeordnet sind.

Der Erfindung liegt die grundsätzliche Überlegung zugrunde, ein Photovoltaikmodul mit einem entsprechenden seitlich angebrachten Eingriffsprofil zu versehen. Dieses Eingriffsprofil kann dann mit einem entsprechenden Gegenprofil auf einem Dach in Eingriff gebracht werden, um das Photovoltaikmodul insbesondere formschlüssig an dem Dach zu befestigen bzw. zu halten. Mit anderen Worten kann das Eingriffsprofil formschlüssig in Eingriff mit dem entsprechenden Gegenprofil gebracht werden, um das Photovoltaikmodul am Dach zu befestigen. Unter einer seitlichen Anbringung ist bevorzugt zu verstehen, dass sich das Eingriffsprofil in einem seitlichen Randbereich des Photovoltaikmoduls befindet oder den seitlichen Randbereich bzw. einen seitlichen Endbereich bildet.

Bevorzugt weist das Photovoltaikmodul zwei einander gegenüberliegend angebrachte Eingriffsprofile auf. Dazu korrespondierend kann das Bauwerk jeweils mindestens ein, insbesondere mehrere Paare von Gegenprofilen, die parallel zueinander verlaufen und die korrespondierend zu dem Eingriffsprofil des Photovoltaikmoduls voneinander beabstandet sind, aufweisen. Mit anderen Worten ist der Abstand der beiden seitlich angebrachten Eingriffsprofilen des Photovoltaikmoduls entsprechend zu dem Abstand der Gegenprofile an dem Bauwerk ausgebildet, so dass die beiden Eingriffsprofile eines Photovoltaikmoduls mit jeweils einem Gegenprofil in Eingriff gebracht werden können.

Die Gegenprofile sind bevorzugt auf dem Dach, insbesondere auf einem geneigten Dach, angeordnet. Bevorzugt verlaufen die Gegenprofile von einer Traufe zum Dachfirst hin. Prinzipiell ist es auch denkbar, derartige Gegenprofile an insbesondere senkrechten Seitenwänden des Bauwerks vorzusehen.

In weiterer Ausgestaltung können die Eingriffsprofile an einander gegenüberliegenden Längsseiten des Photovoltaikmoduls angeordnet sein. Mit anderen Worten kann das Photovoltaikmodul eine Längsrichtung definieren. Das Photovoltaikmodul kann sich auch länglich erstrecken und beispielsweise eine Länge von mindestens 1 m, insbesondere von mindestens 1,5 m, und/oder eine Länge von höchstens 5 m, insbesondere von höchstens 4 m, bevorzugt von höchstens 3 m, besonders bevorzugt eine Länge von 2 m aufweisen. Die Breite des Photovoltaikmoduls kann mindestens 50 cm, insbesondere mindestens 80 cm, und/oder höchstens 2 m, insbesondere höchstens 1,5 m, besonders bevorzugt etwa 1 m betragen. Derartige Abmessungen von Photovoltaikmodulen haben sich bewährt und sind auf der einen Seite leicht handhabbar, auf der anderen Seite allerdings hinreichend groß, um eine angemessene Menge Strom produzieren zu können.

Die Eingriffsprofile können sich zumindest im Wesentlichen über die gesamte Länge des Photovoltaikmoduls oder über einen oder mehrere Längsabschnitte erstrecken.

In weiterer Ausgestaltung der Erfindung können die Eingriffsprofile als Kederschienen ausgebildet sein oder solche umfassen. Dazu korrespondierend können die Gegenprofile als Keder ausgebildet sein oder solche umfassen. Im allgemeinen Gebrauch wird ein Keder als Randverstärkung eines Tuchs oder einer Plane eingesetzt. Bevorzugt hat ein Keder einen runden, insbesondere kreisförmigen Querschnitt, an den sich eine sogenannte Kederfahne anschließt. Dementsprechend kann eine Kederschiene eine Führung aufweisen, deren Querschnitt zu dem Querschnitt des Keders korrespondiert und die zu einer Seite eine schlitzförmige Öffnung aufweist, durch welche, wenn die Kederschiene und der Keder im Eingriff sind, die Kederfahne verläuft. Auf diese Weise kann eine formschlüssige Verbindung realisiert werden. Bevorzugt ist der Keder mit einer Kederfahne versehen, welche ausgehend vom Keder T-förmig verläuft. Ein erster Abschnitt der Kederfahne kann dabei senkrecht zur Oberfläche des Bauwerks verlaufen, bzw. von der Oberfläche des Bauwerks abragen, wohingegen ein zweiter Abschnitt der Kederfahne parallel zur Oberfläche des Bauwerks verläuft. Der zweite Abschnitt kann mit dem Bauwerk, insbesondere mit dem Membrandach oder einer Seitenwand, fest verbunden sein. Konkret kann dieser Abschnitt der Kederfahne mit einem Dach, insbesondere einem Membrandach oder einer Seitenwand, verschweißt, bzw. auf dieses beispielsweise mittels HF-Schweißen aufgeschweißt sein.

Denkbar sind auch Ausführungsformen, bei denen das Eingriffsprofil als Keder ausgebildet ist und das Gegenprofil als Kederschiene. In diesem Fall sind die Keder an dem Photovoltaikmodul vorgesehen und die Kederschienen am Bauwerk, insbesondere am Dach eines Bauwerks.

Die Eingriffsprofile des Photovoltaikmoduls können aus einem Kunststoff, insbesondere aus PVC, bevorzugt aus Hart-PVC, und/oder aus einem elektrisch nicht leitenden Kunststoff bestehen. Ein solcher Kunststoff ermöglicht eine einfache Herstellung der Eingriffsprofile. Eine Ausgestaltung aus einem elektrisch nicht leitenden Kunststoff verhindert das Übertragen von Strom, beispielsweise unerwünschtem Blindstrom, von dem Photovoltaikmodul auf das Bauwerk. Alternativ können die Eingriffsprofile aus einem metallischen Werkstoff, insbesondere aus einer Aluminiumlegierung bestehen. Metallische Werkstoffe haben den Vorteil, dass sie eine hohe mechanische Festigkeit haben und leicht zu beschaffen sind.

In weiterer Ausgestaltung können die Eingriffsprofile mittels einer Nietverbindung, einer Schraubverbindung, einer Klebeverbindung, einer Klemmverbindung und/oder einer Schweißverbindung insbesondere mit dem übrigen Teil des Photovoltaikmoduls verbunden sein. Bei eine Nietverbindung bzw. eine Schraubenverbindung kann eine Vielzahl von Nieten bzw. Schrauben umfassen, die entsprechende Bohrungen im Photovoltaikmodul durchsetzen und über die Länge verteilt angeordnet sind. Besonders bevorzugt ist eine Klebeverbindung, da in diesem Fall keine Bohrungen in dem Photovoltaikmodul angebracht werden müssen und eine gleichmäßige Kraftübertragung über die gesamte Länge des Photovoltaikmoduls erfolgen kann. In konkreter Ausgestaltung umfassen die Eingriffsprofile nicht nur eine Führung oder Aufnahmenut für das Gegenprofil, sondern auch, im Querschnitt betrachtet, einen plattenförmigen Abschnitt, welcher flächig an dem übrigen Teil des Photovoltaikmoduls anliegen kann. Auf diese Weise kann eine großflächige Klebeverbindung und damit eine hohe Festigkeit realisiert werden.

In weiterer Ausgestaltung kann das Photovoltaikmodul einen Träger umfassen. Ein solcher Träger kann mehrere Lagen verschiedener Materialien aufweisen. Insbesondere kann der Träger als Kunststoffstapel ausgebildet sein. In konkreter Ausgestaltung kann der Kunststoffstapel Lagen aus PET, GFK (glasfaserverstärkter Kunststoff) und/oder ETFE umfassen. Durch eine derartige Ausgestaltung kann einerseits ein Photovoltaikmodul auf einfache Weise gefertigt werden und andererseits eine hohe Festigkeit besitzen.

An den Längsseiten des Trägers kann jeweils ein Eingriffsprofil angebracht sein. Konkret kann der Träger flächig auf dem Eingriffsprofil, insbesondere auf einem horizontalen Abschnitt des Eingriffsprofils, aufliegen und in diesem Bereich mit dem Eingriffsprofil stoffschlüssig verbunden, insbesondere verklebt sein.

Auf der Oberseite des Trägers können Solarzellen, insbesondere Silizium-Solarzellen, bevorzugt kristalline Silizium-Solarzellen, angebracht oder in diesen eingebettet sein.

Gemäß einer bevorzugten Ausführungsform der Erfindung kann das Photovoltaikmodul auf seiner Rückseite Abstandhalter aufweisen. Dieser Ausgestaltung liegt die Überlegung zugrunde, sicherzustellen, dass ein Träger des Photovoltaikmoduls nicht unmittelbar in Kontakt mit dem Bauwerk, insbesondere mit dem Dach kommen kann. Gerade bei der Verwendung von Membrandächern, welche häufig nicht vollständig gespannt sind und flattern können, kann durch solche Abstandhalter ein Kontakt vermieden werden. Gleichzeitig kann durch solche Abstandhalter eine thermische Entkopplung zwischen dem Photovoltaikmodul und dem Dach erreicht werden.

Konkret können die Abstandhalter in Form von mindestens einem, insbesondere von mindestens zwei sich parallel zueinander in Längsrichtung erstreckenden Streifen ausgebildet sein. Bevorzugt sind die Abstandhalter in Form von zwei sich parallel zueinander in Längsrichtung erstreckenden Streifen ausgebildet. Diese können in Seitenrichtung voneinander beabstandet sein. Insbesondere können in dem Zwischenraum zwischen den beiden Streifen elektrische Leitungen bzw. Kabel geführt werden. Gleichzeitig kann ein solcher Zwischenraum dazu dienen, Regenwasser sicher von der Dachoberfläche abzuführen. Dadurch kann verhindert werden, dass Wasser über einen längeren Zeitraum in Kontakt mit dem Photovoltaikmodul kommt, was prinzipiell zu Korrosionsproblemen führen kann. In konkreter Ausgestaltung kann der Abstand der Streifen voneinander mindestens 2 cm, bevorzugt mindestens 5 cm, und/oder höchstens 30 cm, bevorzugt höchstens 20 cm, besonders bevorzugt 25 cm betragen.

Die Streifen können eine Dicke von mindestens 5 mm, insbesondere von mindestens 10 mm, bevorzugt von mindestens 15 mm, und/oder von höchstens 40 mm, insbesondere von höchstens 30 mm, bevorzugt von höchstens 25 mm aufweisen. Besonders bevorzugt weisen die Streifen eine Dicke von 20 mm auf. Gemäß einer bevorzugten Ausgestaltung können die Streifen eine Breite von mindestens 10 cm, insbesondere von mindestens 20 cm, und/oder von höchstens 40 cm, insbesondere von höchstens 30 cm, bevorzugt eine Breite von 25 cm aufweisen.

Der bzw. die Streifen oder der/die Abstandhalter kann/können aus Schaumstoff, insbesondere aus PE-Schaumstoff und/oder aus geschlossenporigem Schaumstoff bestehen. Derartiger Schaumstoff ist leicht handhabbar und kann insbesondere im Zusammenhang mit flexiblen Photovoltaikmodulen eingesetzt werden, da er sich leicht verformen lässt, wenn die Photovoltaikmodul beispielsweise aufgerollt werden. Durch die Verwendung von geschlossenporigem Schaumstoff kann weitgehend verhindert werden, dass sich dieser mit Wasser vollsaugt.

Konkret können die Streifen an einer Unterseite des Trägers angeklebt sein. Die Streifen können sich zumindest im Wesentlichen insbesondere durchgängig über die gesamte Länge des Photovoltaikmoduls erstrecken.

Denkbar sind auch Ausführungsformen, bei denen sich der Abstandhalter zumindest im Wesentlichen über das gesamte Photovoltaikmodul, insbesondere über die gesamte Unterseite des Trägers, erstreckt. In diesem Fall kann der Abstandhalter aus einer durchgängigen Schaumstoff-Platte bestehen. Auf diese Weise können die mechanischen Beanspruchungen gleichmäßig verteilt werden.

Gemäß einer bevorzugten Ausgestaltung der Erfindung kann das Photovoltaikmodul flexibel oder semi-flexibel ausgebildet sein. Unter einem flexiblen Photovoltaikmodul ist bevorzugt ein solches zu verstehen, welches sich auf einer Rolle aufrollen lässt. Auf diese Weise kann das Photovoltaikmodul, wenn es nicht im Betrieb ist, platzsparend gelagert und transportiert werden. Bevorzugt kann man von einem flexiblen Photovoltaikmodul auch dann sprechen, wenn dessen Mindestbiegeradius weniger als 1 m beträgt. Mit anderen Worten kann dann das Photovoltaikmodul, bzw. der Träger, so flexibel ausgestaltet sein, dass ohne Beschädigung eine Biegung mit einem Radius von weniger als 1 m möglich ist. Von einem semi-flexiblen Photovoltaikmodul spricht man bevorzugt, wenn dieses biegsam ist, jedoch nicht aufrollbar ist. Der Mindestbiegeradius liegt dabei bevorzugt oberhalb von 1 m, insbesondere oberhalb von 1,5 m. Bevorzugt kann der Mindestbiegeradius mindestens 2 m betragen. Bevorzugt weisen flexible und semi-flexible Photovoltaikmodule keine Frontglasscheibe und keinen Metall-Rahmen auf.

In weiterer Ausgestaltung kann das Photovoltaikmodul keine Metallunterkonstruktion aufweisen. In diesem Fall kann ein Träger im Wesentlichen aus Kunststoff bestehen. Dadurch können die Photovoltaikmodule leicht sein, sodass an das Bauwerk, an welches diese angebracht werden sollen, keine hohen statischen Anforderungen gestellt werden. Bevorzugt weisen die Photovoltaikmodule ein flächenbezogenes Gewicht von höchstens 8 kg/m², insbesondere von höchstens 6 oder 5 kg/m², bevorzugt von etwa 4 kg/m² auf.

Die Solarzellen können mit einer Folie, insbesondere einer transparenten Folie, bevorzugt einer ETFE-Folie, bedeckt sein. Dadurch können die Solarzellen vor Umgebungseinflüssen geschützt werden, und gleichzeitig ist eine solche Folie biegsam und leicht.

Gemäß einer alternativen Ausführungsform der Erfindung kann das Photovoltaikmodul eine Metallunterkonstruktion, insbesondere eine Aluminium-Unterkonstruktion aufweisen. In diesem Fall handelt es sich nicht um ein flexibles oder semi-flexibles Photovoltaikmodul, sondern um ein starres Modul. Die Metallunterkonstruktion kann ein Metallprofil, insbesondere ein aus einem Blech hergestelltes Metallprofil umfassen. Man kann hier auch von einem profilierten Metallblech sprechen. Dabei kann das Metallprofil eine dreidimensionale Struktur aufweisen. Konkret kann dazu ein Blech gelasert und/oder gestanzt werden. Durch entsprechende Umformung kann aus einem Blech eine Metallunterkonstruktion hergestellt werden, welche eine hohe Festigkeit und Steifigkeit aufweist.

Das Photovoltaikmodul kann an seiner Oberseite eine Glasplatte aufweisen, welche Solarzellen überdeckt. In diesem Fall spricht man nicht mehr von einem flexiblen oder semi-flexiblen Photovoltaikmodul, sondern von einem unflexiblen oder starren Photovoltaikmodul. Ohne Beschädigung der Glasplatte ist es nicht möglich, das Photovoltaikmodul über eine geringe Elastizität hinaus zu biegen.

Die der Erfindung zugrunde liegende Aufgabe ist ferner gelöst durch eine Photovoltaikanlage umfassend mindestens ein Photovoltaikmodul, insbesondere mehrere Photovoltaikmodule wie zuvor beschrieben. Bevorzugt umfasst die Photovoltaikanlage eine Vielzahl von Photovoltaikmodulen. Diese können elektrisch miteinander verschaltet sein.

Das erfindungsgemäße Bauwerk kann eine Tragstruktur umfassen, welche insbesondere Stahl- und/oder Aluminiumträger aufweist. Konkret kann die Tragstruktur mehrere Dachträger aufweisen, welche beabstandet zueinander insbesondere von einer Traufe zum First verlaufen, wobei die Dachträger bevorzugt parallel zueinander verlaufen. Das Dach, insbesondere ein Membrandach, kann auf den Dachträgern aufliegen und/oder mit diesen verbunden bzw. an diesen befestigt sein. Konkret kann vorgesehen sein, dass das Dach an den beiden äußersten Dachträgern mit diesen verbunden ist, und auf den dazwischen liegenden Dachträgern aufliegt. Die Verbindung mit den beiden äußersten Dachträgern kann über einen Keder und eine dazu korrespondierende Kederschiene realisiert sein. Denkbar ist auch, dass die beiden äußersten Dachträger eine integrierte Kederaufnahme aufweisen. Mit anderen Worten kann eine Kederaufnahme in die Dachträger integriert sein, insbesondere wenn die Dachträger aus einem Alu- oder Stahlprofil bestehen.

Bevorzugt sind die Gegenprofile paarweise in Bereichen zwischen zwei zueinander benachbarten Dachträgern angeordnet. Insbesondere können zwischen zwei benachbarten Dachträgern jeweils zwei Paare von Gegenprofilen angeordnet sein. In weiterer Ausgestaltung können zwischen jedem Paar einander benachbarter Dachträger jeweils Gegenprofile, insbesondere zwei, drei, vier oder fünf Paare von Gegenprofilen, angeordnet sein.

Die der Erfindung zugrunde liegende Aufgabe ist ferner gelöst durch ein Verfahren zum Anbringen eines Photovoltaikmoduls oder einer Photovoltaikanlage wie zuvor beschrieben an einem solchen Bauwerk. Dabei werden die Eingriffsprofile des Photovoltaikmoduls mit den Gegenprofilen insbesondere formschlüssig in Eingriff gebracht und die Eingriffsprofile des Photovoltaikmoduls werden auf die Gegenprofile aufgeschoben, um das Photovoltaikmodul an dem Bauwerk zu befestigen. Mit anderen Worten ist es vorgesehen, die Profile miteinander in Eingriff zu bringen und dann die Eingriffsprofile und damit auch das Photovoltaikmodul auf die Gegenprofile aufzuschieben. Dadurch kann eine formschlüssige Verbindung quer zur Längsrichtung der Profile zwischen dem Photovoltaikmodul und dem Bauwerk erreicht werden.

Insbesondere wenn die Photovoltaikmodule an einem Dach befestigt werden sollen, kann vorgesehen sein, dass die Photovoltaikmodule mittels eines Seilzugs und durch Umlenkung von der Traufe Richtung First gezogen werden.

In weiterer Ausgestaltung des Verfahrens können die Photovoltaikmodule in einer Endposition befestigt werden. Mit anderen Worten können Arretiermittel vorgesehen sein, um zu verhindern, dass sich die Photovoltaikmodule im montierten Zustand entlang der Längsrichtung der Eingriffsprofile bzw. der Gegenprofil bewegen können.

Gemäß einem zweiten Aspekt betrifft die vorliegende Erfindung ein Bauwerk, insbesondere wie zuvor im Zusammenhang mit dem ersten Aspekt beschrieben, umfassend ein Dach, nämlich ein Membrandach, bevorzugt ein textiles Membrandach, und eine Tragstruktur, welche mehrere Dachträger aufweist, die beabstandet zueinander insbesondere von einer Traufe zum First verlaufen.

Bei Membrandächern stellt es sich zu teilen als schwierig heraus, diese in jede Richtung ausreichend zu spannen. In diesem Fall kann ein Flattern des Dachs auftreten, insbesondere wenn Windbelastungen wirken. Gerade wenn flexible oder semi-flexible Photovoltaikmodule auf einem solchen Dach befestigt werden sollen, kann dies zu einem zusätzlichen Flattern auch der Photovoltaikmodule führen, was diese auf Dauer beschädigen kann.

Vor diesem Hintergrund besteht die Aufgabe der Erfindung auch darin, ein alternatives Bauwerk zu schaffen, welches insbesondere diese Nachteile vermeidet.

Diese Aufgabe ist bei einem Bauwerk der zuvor genannten Art dadurch gelöst, dass in den Bereichen zwischen den Dachträgern ein Druckschlauch vorgesehen ist, welcher mit dem Membrandach verbunden oder in einer in dem Membrandach ausgebildeten Aufnahmetasche angeordnet ist, um durch Beaufschlagung des Druckschlauchs mit Druck das Membrandach zu spannen.

Dieser Ausgestaltung liegt die grundsätzliche Überlegung zugrunde, dass ein Schlauch üblicherweise flexibel ist und im drucklosen Zustand, d.h. wenn sich kein entsprechendes Fluid, beispielsweise Druckluft, darin befindet, flach ausgebildet ist. Wird der Schlauch dann mit Druck beaufschlagt, indem beispielsweise Druckluft in diesen gepumpt wird, so vergrößert sich der Querschnitt des Schlauchs, sodass er sich in Höhenrichtung vergrößert, in Seitenrichtung allerdings zusammenzieht. Mit anderen Worten wird ausgenutzt, dass bei Druckbeaufschlagung der Umfang des Schlauchs zwar im Wesentlichen gleichbleibt, sich allerdings ein nahezu kreisförmiger Querschnitt einstellt. Dadurch zieht sich der Schlauch in einer Seitenrichtung zusammen und spannt so die Dachmembran.

Durch das Integrieren eines solchen Schlauchs in das Membrandach kann dieses auf einfache Weise gespannt werden, indem der Schlauch mit Druck beaufschlagt wird. Dabei kann der Schlauch direkt in das Membrandach integriert sein, d. h. der Schlauch kann fest mit der Membran verbunden oder in dieser eingenäht sein. Im Bereich des Druckschlauchs kann die Membran unterbrochen sein. Möglich ist auch, in dem Membrandach eine entsprechende längliche Aufnahmetasche vorzusehen, in welcher ein Schlauch untergebracht werden kann oder untergebracht ist. In diesem Fall kann der Schlauch bedarfsweise eingebracht werden und auf einfache Weise, beispielsweise bei einer Beschädigung, ausgetauscht werden.

In konkreter Ausgestaltung kann es sich bei dem Druckschlauch um einen Feuerwehrschlauch handeln. Feuerwehrschläuche sind bevorzugt dadurch gekennzeichnet, dass sie im drucklosen Zustand flach sind und sich auf einfache Weise zusammenrollen lassen.

Der Druckschlauch verläuft bevorzugt parallel zu den Dachträgern. Insbesondere kann dieser mittig zwischen zwei Dachträgern verlaufen. Bevorzugt ist das Bauwerk derart ausgestaltet, dass sich jeweils ein Druckschlauch zwischen sämtlichen Paaren jeweils benachbarter Dachträger befindet. In weiterer Ausgestaltung kann der Druckschlauch sich über mindestens 80 % der Strecke zwischen Traufe und First des Dachs erstrecken.

Bevorzugt verlaufen die Gegenprofile und der Druckschlauch parallel zueinander. Dadurch kann eine gleichmäßige Spannung im Membrandach erzielt werden, wodurch auch ein Flattern der angebrachten Photovoltaikmodule sicher verhindert werden kann.

Das Bauwerk gemäß dem ersten und dem zweiten Aspekt der Erfindung kann dadurch gekennzeichnet sein, dass die Dachneigung mindestens 10° und/oder höchstens 30°, bevorzugt 18° beträgt. Derartige Dachneigungen sind bei Leichtbauhallen oder Zelten üblich.

Das Dach kann als Membrandach ausgebildet sein und bevorzugt eine oder mehrere Membranlagen umfassen. Das Membrandach kann eine Dachplane aus beidseitig PVC-beschichtetem Polyestergewebe oder einem anderen Dachbahnmaterial, beispielsweise TPO/FPO, ETFE, PE, EPDM, EVA, ECB oder dergleichen umfassen oder daraus bestehen. Bei dem Bauwerk kann es sich um eine Leichtbauhalle oder um ein Zelt handeln.

Gegenstand der Erfindung ist ferner ein Bauwerk wie zuvor im Zusammenhang mit dem ersten und/oder dem zweiten Aspekt der Erfindung beschrieben mit einer Photovoltaikanlage, insbesondere wie zuvor beschrieben.

Gemäß einem weiteren Aspekt bezieht sich die Erfindung auf die Verwendung von Photovoltaikmodulen auf oder an Leichtbauhallen oder ähnlichen baulichen Anlagen, deren Dächer oder sonstige Bauteile aus ein- oder mehrlagigen textilen Membranen bestehen. Es handelt sich im Regelfall um Tragwerkskonstruktionen aus Stahlträgern, die Überdachung besteht aus Dachplanen aus beidseitig PVC-beschichtetem Polyestergewebe oder anderem Dachbahnmaterial (TPO/FPO, ETFE, PE, EPDM, EVA, ECB usw.), die mittels Kedernuten bzw. Aufnahmen einzuziehenden Kedern mit der Tragwerkskonstruktion verbunden werden. Eine schnelle und einfache Möglichkeit, Photovoltaikmodule auf derartigen Bauwerken anzubringen, bestand bisher nicht.

Mit diesem Aspekt der Erfindung wird dieses Problem gelöst, indem an den Längsseiten von flexiblen oder semi-flexiblen Photovoltaikmodulen Kederschienen oder Kederschienenstücke angebracht werden. Als Verbindung kommen verschiedene Techniken in Betracht, wie Nieten, Schrauben, Klemmen, Kleben, Schweißen u.a., vorzugsweise Nieten und/oder Kleben. In die Kederschienen bzw. Kederschienenstücke wird ein Keder eingeführt, der auf der Bedachung oder der Fassade des Bauwerks angebracht (vorzugsweise aufgeschweißt) ist. In die gleiche Keder können beliebig viele Photovoltaikmodule nacheinander eingezogen werden. Das Modul wird mithilfe eines Seils und einer Umlenkung, die unterhalb des jeweiligen Hochpunktes angebracht ist, aufgezogen. Die Befestigung ist an den Längsseiten durch die vorstehende beschriebene Verwendung eines Keders gewährleistet, an den Traufseiten erfolgt die Befestigung mittels Abspannung und/oder eines formschlüssigen Verschlusses auf dem Keder. Ein Betreten des Dachs ist nicht erforderlich. Die Demontage der Photovoltaikanlage erfolgt entsprechend in der umgekehrten Reihenfolge.

Die Erfindung betrifft die folgenden Unteraspekte:
1. Photovoltaikanlage zur Anbringung auf oder an baulichen Anlagen, wobei die Photovoltaikmodule ohne Metallunterkonstruktion angebracht werden.
2. Photovoltaikanlage nach Unteraspekt 1, wobei die Photovoltaikmodule flexibel oder semi-flexibel sind.
3. Photovoltaikanlage nach einem der vorhergehenden Unteraspekte, dadurch gekennzeichnet, dass die einzelnen Photovoltaikmodule mit seitlich angebrachten Kederschienen oder Kederschienenstücken ausgestattet werden.
4. Photovoltaikanlage nach einem der vorhergehenden Unteraspekte, wobei in die Kederschienen oder Kederschienenstücke gemäß Unteraspekt 3 Keder eingeführt werden, die auf die (mit PVC, TPO/FPO, ETFE, PE, EPDM, EVA, ECB oder ähnlichen beschichteten) Bedachung oder Fassade des Bauwerks befestigt (vorzugsweise aufgeschweißt) sind.
5. Photovoltaikanlage nach einem der vorhergehenden Unteraspekte, wobei die Photovoltaikmodule gemäß den Unteraspekten 3 und 4 mittels Seil und einer unterhalb des Firstes angebrachten Umlenkung auf das Dach gezogen werden bzw. bei der Verwendung an Fassaden vom Boden mittels Seilzug zur Traufe aufgezogen werden.
6. Photovoltaikanlage nach einem der vorhergehenden Unteraspekte, wobei die Photovoltaikmodule gemäß den Unteraspekten 3, 4 und 5 durch Abspannung zur Traufe befestigt werden bzw. bei der Verwendung an Fassaden an der Traufe und dem Bodenbereich fixiert werden.

Gemäß einem weiteren Aspekt bezieht sich die Erfindung auf die Verwendung von Photovoltaikmodulen auf beispielsweise mit Trapezblechen eingedeckten Gebäuden. Diese sind im Regelfall statisch nicht für die Aufnahme zusätzlicher Dachlasten ausgelegt. Damit scheidet die Verwendung von herkömmlichen Photovoltaikanlagen infolge des Eigengewichts der Photovoltaikmodule und des Gewichts der erforderlichen Unterkonstruktion häufig aus statischen Gründen aus. Eine Ertüchtigung der Gebäudekonstruktion ist im Regelfall wirtschaftlich nicht sinnvoll.

Gemäß diesem Aspekt der Erfindung wird dieses Problem gelöst, indem flexible oder semi-flexible Photovoltaikmodule verwendet werden, die leichter sind als herkömmliche Photovoltaikmodule. Eine Stahlunterkonstruktion auf dem Dach entfällt, da dort lediglich Kederschienen von der Traufe zum First angebracht werden, in die Keder eingeführt werden, die längsseitig an einem oder mehreren flexiblen Photovoltaikmodulen angebracht sind. Als Verbindung kommen verschiedene Techniken in Betracht wie Nieten, Schrauben, Kleben, Klemmen, Schweißen u.a., vorzugsweise Nieten und/oder Kleben. Mittels Seilzug werden die Module von der Traufe zum First eingezogen und dort befestigt. Ein Betreten des Dachs ist dazu nicht erforderlich.

Bevorzugt zeichnet sich dieser Aspekt der Erfindung durch folgende Unteraspekte aus:
1. Photovoltaikanlage zur Anbringung auf Hallen oder sonstigen Gebäudedächern, wobei flexible oder semi-flexible Photovoltaikmodule unter Verzicht auf eine herkömmliche Metallunterkonstruktion verwendet werden.
2. Photovoltaikanlage gemäß Unteraspekt 1, wobei auf dem Dach Kederschienen von der Traufe bis zum First angebracht werden, in die Keder eingeführt werden, die beidseitig an dem oder den flexiblen oder semi-flexiblen Photovoltaikmodul(en) angebracht sind.
3. Photovoltaikanlage gemäß einem der vorherigen Unteraspekte, wobei die gemäß Unteraspekt 2 in Kederschienen eingeführten Module mittels Seilzug und durch Umlenkung von der Traufe Richtung First bezogen oder gezogen und in der Endposition befestigt werden.

Für die weitere Ausgestaltung der Erfindung wird auf die Unteransprüche und auf die nachstehende Beschreibung eines Ausführungsbeispiels unter Bezugnahme auf die Zeichnung verwiesen. In der Zeichnung zeigen:
- Figur 1: ein Dach eines Bauwerks gemäß dem ersten Aspekt der vorliegenden Erfindung mit einer darauf befestigten Photovoltaikanlage in einer Querschnittansicht;
- Figur 2: das Dach aus Figur 1 in einer Draufsicht;
- Figur 3: ein Dach eines Bauwerks gemäß dem zweiten Aspekt der vorliegenden Erfindung in einer perspektivischen Detailansicht;
- Figur 4: das Dach aus Figur 3 in einer detaillierten Querschnittansicht im ungespannten Zustand; und
- Figur 5: das Dach aus Figur 3 in einer detaillierten Querschnittansicht im gespannten Zustand.

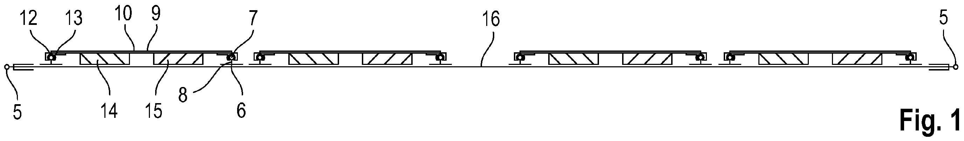

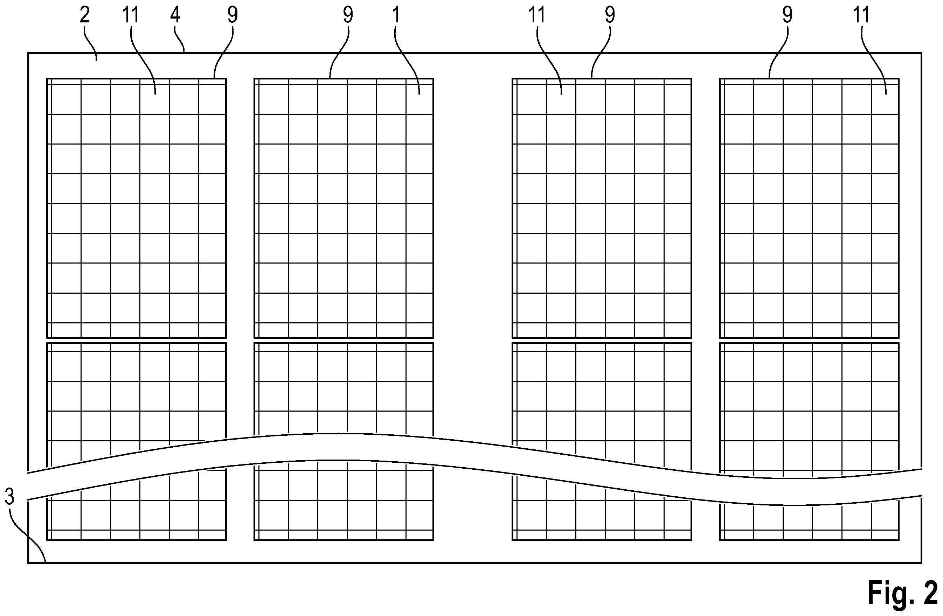

Die Figuren 1 und 2 zeigen einen Ausschnitt eines erfindungsgemäßen Bauwerks mit einer darauf befestigten Photovoltaikanlage 1 gemäß der vorliegenden Erfindung. Konkret ist eine Hälfte eines Daches 2 abgebildet, welches vorliegend als einlagiges Membrandach ausgebildet ist. Das Dach 2 hat eine Abmessung von etwa 5 m x 8 m, wobei das in der Figur 2 unten dargestellte Ende des Dachs 2 die Traufe 3 bildet und dass in der Figur 2 oben dargestellte Ende den First 4 bildet. An den beiden in den Figuren 1 und 2 seitlichen Enden ist jeweils ein Keder 5 angeordnet, über welchen das Dach 2 an einer Tragstruktur oder an anderen Komponenten des Bauwerks befestigt und verspannt werden kann.

Das Bauwerk, konkret das Dach 2, umfasst insgesamt vier Paare von Gegenprofilen 6, welche sich jeweils parallel zueinander von der Traufe 3 bis zum First 4 erstrecken. Die Gegenprofile 6 eines jeden Paares sind jeweils etwa 100 cm voneinander beabstandet.

Jedes Gegenprofil 6 umfasst einen Keder 7 und eine Kederfahne 8, welche einen T-förmigen Querschnitt aufweist. Der T-förmige Querschnitte weist einen ersten Abschnitt, welcher senkrecht verläuft, und einen zweiten Abschnitt, welcher in der Figur 1 horizontal verläuft, auf. Über den zweiten Abschnitt der Kederfahne 8 ist das Gegenprofil 6 mit dem Dach 2 stoffschlüssig verbunden, konkret verschweißt.

Mittels der Gegenprofile 6 ist die Photovoltaikanlage 1 an dem Dach befestigt. Die Photovoltaikanlage 1 umfasst eine Vielzahl von Photovoltaikmodulen 9, die parallel zueinander und hintereinander auf dem Dach angeordnet sind. Jedes Photovoltaikmodul 9 hat eine Länge von etwa 2 m und eine Breite von etwa 1 m.

Jedes Photovoltaikmodul 9 umfasst einen Träger 10, der vorliegend als Kunststoffstapel mit Lagen aus PET, GFK und ETFE ausgebildet ist. Der lagenförmige Aufbau ist nicht im Detail in den Figuren dargestellt. Auf der Oberseite des Trägers 10 sind Solarzellen 11, vorliegend kristalline Silizium-Solarzellen, angebracht. Die Solarzellen 11 sind mit einer transparenten ETFE-Folie überdeckt. Die Photovoltaikmodule 9 sind semi-flexibel ausgebildet, wobei diese einen Mindestbiegeradius von weniger als 1 m aufweisen und zum Transport und zur Lagerung aufgerollt werden können. Dementsprechend weisen die Photovoltaikmodule 9 keine Metallunterkonstruktion auf.

Seitlich sind an jedem Photovoltaikmodul 9 Eingriffsprofile 12 aus Hart-PVC angebracht. Konkret sind die Eingriffsprofile 12 an einander gegenüberliegenden Längsseiten des jeweiligen Photovoltaikmoduls 9 angeordnet. Die Eingriffsprofile 12 sind als Kederschienen ausgebildet bzw. umfassen jeweils eine solche Kederschiene 13. Der Abstand der beiden einander gegenüberliegenden Kederschienen 13 ist dabei so gewählt, dass er mit dem Abstand der Paare der Gegenprofile 6 bzw. der Keder 7 korrespondiert, sodass, wie in Figur 1 erkennbar ist, die Kederschienen 13 der Eingriffsprofile 12 mit den Kedern 7 der Gegenprofile 6 in einen formschlüssigen Eingriff gebracht werden können.

Die Eingriffsprofile 12 erstrecken sich über die gesamte Länge des jeweiligen Photovoltaikmoduls 9 und sind mit dem jeweiligen Träger 10 verklebt. Konkret liegt der Träger 10 flächig auf einem horizontalen Abschnitt des Eingriffsprofils 12 von oben auf. Die Kederschienen 13 sind dabei bevorzugt in Seitenrichtung am jeweiligen Längsrand des Trägers 10 angeordnet und befinden sich in vertikaler Richtung bevorzugt unterhalb des Trägers 10.

Auf seiner Rückseite weist jedes Photovoltaikmodul 9 Abstandhalter 14 auf. Diese sind in Form von zwei sich parallel zueinander in Längsrichtung erstreckenden Streifen 15 aus einem geschlossenporigen PE-Schaumstoff ausgebildet. Die Streifen 15 eines Photovoltaikmodul 9 erstrecken sich über dessen gesamte Länge und sind seitlich voneinander beabstandet. Der Abstand beträgt vorliegend etwa 10 cm. In dem Zwischenraum zwischen den beiden Streifen 15 können elektrische Leitungen verlegt werden und/oder Regenwasser kann abfließen, ohne dass der Träger 10 und die darauf angeordneten Solarzellen 11 mit Stauwasser in Kontakt kommen.

Die Streifen 15 weisen eine Dicke von 20 mm und eine Breite von jeweils 25 cm auf. Sie sind an die Unterseite des Trägers 10 angeklebt.

Wenn die Photovoltaikmodule 9 auf dem Bauwerk, konkret auf dem Dach 2 befestigt werden sollen, so wird ein vorderes Ende der Eingriffsprofile 12, konkret die Kederschienen 13, mit einem traufenseitigen Ende der Gegenprofile 6, konkret der Keder 7, in Eingriff gebracht. Das jeweilige Photovoltaikmodul 9 kann dann in Richtung First 4 auf das Dach 2 aufgeschoben werden, wobei eine zunehmend längere Strecke der Gegenprofile 6 in Eingriff mit dem Eingriffsprofilen 12 steht. Wenn die Photovoltaikmodule 9 ihre Endposition erreicht haben, können diese mittels geeigneter Arretiermittel gegen ein unbeabsichtigtes Verschieben entlang der Gegenprofile 6 gesichert werden. Auf diese Weise kann ein leichtes und schnelles Anbringen und gleichzeitig eine feste, formschlüssige Befestigung an einem Dach 2 erreicht werden.

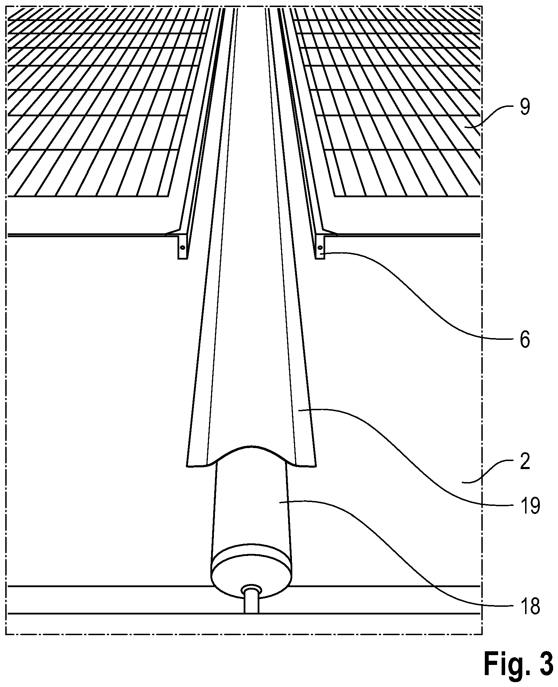

In der Figur 3 ist ein Ausschnitt eines erfindungsgemäßen Bauwerks gemäß dem zweiten Aspekt der Erfindung dargestellt. Konkret handelt es sich hier um einen Ausschnitt eines Dachs 2. Das Dach 2 umfasst eine Membran 16, welche prinzipiell ein- oder mehrlagig ausgebildet sein kann.

Ferner umfasst das Bauwerk eine Tragstruktur, welche mehrere Dachträger 17 aufweist. Diese verlaufen beabstandet und parallel zueinander zwischen der Traufe 3 in Richtung des First 4. Zwischen zwei benachbarten Dachträgern 17 sind jeweils zwei Paare von Gegenprofilen 6 angeordnet, die sich ebenfalls parallel zueinander und parallel zu den Dachträgern 17 von der Traufe 3 in Richtung des First 4 erstrecken. Zwischen den beiden Paaren von Gegenprofilen 6 ist, wie in der Figur 3 erkennbar ist, ein Druckschlauch 18 vorgesehen, welcher in einer in dem Dach 2 ausgebildeten Aufnahmetasche 19 angeordnet ist. Konkret handelt es sich bei dem Druckschlauch 18 um einen Feuerwehrschlauch. Dieser kann wahlweise mit Druck beaufschlagt werden, um das Dach 2 zu spannen.

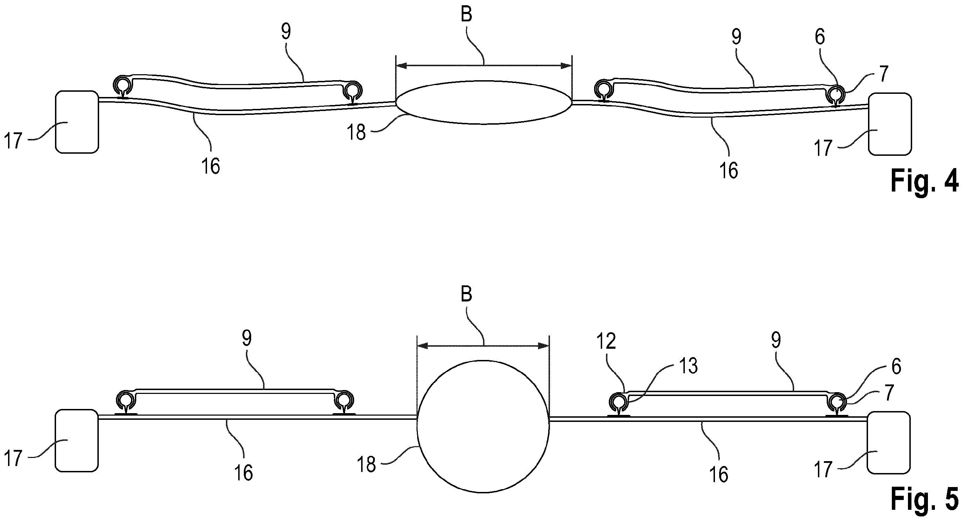

In der Figur 4 ist dabei die Funktionsweise des Druckschlauchs 18 im ungespannten Zustand schematisch dargestellt. Dabei erstreckt sich der Druckschlauch 18 über eine gewisse Breite B und ist aufgrund der geringen Befüllung mit einem Fluid, beispielsweise Druckluft, eher flach ausgebildet. In einer solchen Situation ist auch die Membran 16 des Dachs 2 nicht gespannt, was zur Folge hat, dass die über die Gegenprofile 6 angebrachten Photovoltaikmodule 9 insbesondere bei Windbeanspruchung flattern können. Dadurch kann die Lebensdauer der Photovoltaikmodule 9 beeinträchtigt sein.

In Figur 5 ist schematisch der Druckschlauch 18 mit Druckbeaufschlagung dargestellt. In diesem Fall ergibt sich ein im Wesentlichen kreisförmiger Querschnitt des Druckschlauchs 18, wodurch sich die Breite B verringert und die benachbarten Abschnitte der Membran 16 gespannt werden. Dadurch kann sichergestellt werden, dass auch die angebrachten flexiblen Photovoltaikmodule 9 nicht flattern.

### Bezugszeichenliste

- 1: Photovoltaikanlage
- 2: Dach
- 3: Traufe
- 4: First
- 5: Keder
- 6: Gegenprofil
- 7: Keder
- 8: Kederfahne
- 9: Photovoltaikmodul
- 10: Träger
- 11: Solarzelle
- 12: Eingriffsprofil
- 13: Kederschiene
- 14: Abstandhalter
- 15: Streifen
- 16: Membran
- 17: Dachträger
- 18: Druckschlauch
- 19: Aufnahmetasche
- B: Breite

## Patentansprüche

1. Photovoltaikmodul (9), welches seitlich angebrachte Eingriffsprofile (12) aufweist.

2. Photovoltaikmodul (9) nach Anspruch 1, **dadurch gekennzeichnet, dass** die Eingriffsprofile (12) an einander gegenüberliegenden Längsseiten des Photovoltaikmoduls (9) angeordnet sind, und /oder dass sich die Eingriffsprofile (12) zumindest im Wesentlichen über die gesamte Länge des Photovoltaikmoduls (9) oder über einen oder mehrere Längsabschnitte erstrecken, und/oder dass die Eingriffsprofile (12) als Kederschienen (13) ausgebildet sind oder solche umfassen, und/oder dass die Eingriffsprofile (12) aus einem Kunststoff, insbesondere aus PVC, bevorzugt aus Hart-PVC, und/oder aus einem elektrisch nicht leitenden Kunststoff bestehen, oder dass die Eingriffsprofile (12) aus einem metallischen Werkstoff, insbesondere aus einer Aluminiumlegierung, bestehen, und/oder dass die Eingriffsprofile (12) mittels einer Nietverbindung, einer Schraubverbindung, einer Klebeverbindung, einer Klemmverbindung und/oder einer Schweißverbindung insbesondere mit dem übrigen Teil des Photovoltaikmoduls (9) verbunden sind.

3. Photovoltaikmodul nach einem der vorherigen Ansprüche, **dadurch gekennzeichnet, dass** das Photovoltaikmodul (9) einen Träger (10) umfasst, wobei, insbesondere, der Träger (10) als Kunststoffstapel ausgebildet ist, wobei der Kunststoffstapel bevorzugt Lagen aus PET, GFK und/oder ETFE umfasst, und/oder wobei, insbesondere, an den Längsseiten des Trägers (10) jeweils ein Eingriffsprofil (12) angebracht ist, und/oder wobei, insbesondere, auf der Oberseite des Trägers (10) Solarzellen (11), bevorzugt Silizium-Solarzellen, besonders bevorzugt kristalline Silizium-Solarzellen, angebracht sind oder in diesen eingebettet sind.

4. Photovoltaikmodul (9) nach einem der vorherigen Ansprüche, **dadurch gekennzeichnet, dass** dieses auf seiner Rückseite Abstandhalter (14) aufweist.

5. Photovoltaikmodul (9) nach Anspruch 4, **dadurch gekennzeichnet, dass** die Abstandhalter (14) in Form von mindestens einem, insbesondere von mindestens zwei sich parallel zueinander in Längsrichtung erstreckenden Streifen (15) ausgebildet sind.

6. Photovoltaikmodul (9) nach Anspruch 5, **dadurch gekennzeichnet, dass** die Abstandhalter (14) in Form von zwei sich parallel zueinander in Längsrichtung erstreckenden Streifen (15) ausgebildet sind, die seitlich voneinander beabstandet sind, wobei der Abstand der Streifen (15) voneinander insbesondere mindestens 2 cm, bevorzugt mindestens 5 cm, und/oder höchstens 40 cm, insbesondere höchstens 20 cm beträgt, und/oder dass die Streifen (15) aus Schaumstoff, insbesondere aus PE-Schaumstoff und/oder aus geschlossen porigem Schaumstoff, bestehen, und/oder dass die Streifen (15) eine Dicke von mindestens 5 mm, insbesondere von mindestens 10 mm, bevorzugt von mindestens 15 mm, und/oder von höchstens 40 mm, insbesondere von höchstens 30 mm, bevorzugt von höchstens 25 mm, besonders bevorzugt eine Dicke von 20 mm aufweisen, und/oder dass die Streifen (15) eine Breite (B) von mindestens 10 cm, insbesondere von mindestens 20 cm, und/oder von höchstens 40 cm, insbesondere von höchstens 30 cm, bevorzugt eine Breite (B) von 25 cm aufweisen, und/oder dass sich die Streifen (15) zumindest im Wesentlichen über die gesamte Länge des Photovoltaikmoduls (9) erstrecken.

7. Photovoltaikmodul (9) nach einem der Ansprüche 5 oder 6 und nach Anspruch 3, **dadurch gekennzeichnet, dass** die Streifen (15) an einer Unterseite des Trägers 10 angeklebt sind.

8. Photovoltaikmodul (9) nach einem der vorherigen Ansprüche, **dadurch gekennzeichnet, dass** dieses flexibel oder semi-flexibel ausgebildet ist, und/oder dass das Photovoltaikmodul (9) unflexibel ist und an seiner Oberseite eine Glasplatte aufweist, welche Solarzellen (11) überdeckt, und/oder dass das Photovoltaikmodul (9) keine Metallunterkonstruktion aufweist, und/oder dass die Solarzellen (11) mit einer Folie, insbesondere einer ETFE-Folie, bedeckt sind, und/oder dass das Photovoltaikmodul (9) eine Metallunterkonstruktion, insbesondere eine Aluminium-Unterkonstruktion aufweist, wobei, bevorzugt, die Metallunterkonstruktion ein Metallprofil, insbesondere ein aus einem Blech hergestelltes, bevorzugt gelasertes und/oder gestanztes Metallprofil, umfasst, wobei das Metallprofil bevorzugt eine dreidimensionale Struktur aufweist.

9. Photovoltaikanlage (1) umfassend mindestens ein Photovoltaikmodul (9), insbesondere mehrere, bevorzugt mehrere elektrisch miteinander verschaltete Photovoltaikmodule (9) nach einem der vorherigen Ansprüche.

10. Bauwerk umfassend ein Dach (2), insbesondere ein Membrandach, bevorzugt ein textiles Membrandach, mit Gegenprofilen (6), die an einer Oberseite des Daches (2) angeordnet sind, wobei, insbesondere, die Gegenprofile (6) parallel zueinander verlaufen und/oder von einer Traufe (3) zum Dachfirst verlaufen, und/oder wobei, insbesondere, die Gegenprofile (6) als Keder (7) ausgebildet sind oder einen Keder (7) umfassen, und/oder wobei, insbesondere, das Bauwerk eine Tragstruktur umfasst, welche bevorzugt Stahl- und/oder Aluminiumträger aufweist, wobei, bevorzugt, die Tragstruktur mehrere Dachträger (17) aufweist, welche beabstandet zueinander insbesondere von einer Traufe (3) zum First (4) verlaufen, wobei die Dachträger (17) besonders bevorzugt parallel zueinander verlaufen.

11. Bauwerk, insbesondere nach Anspruch 10, umfassend ein Dach (2), nämlich ein Membrandach, bevorzugt ein textiles Membrandach, und eine Tragstruktur, welche mehrere Dachträger (17) aufweist, die beabstandet zueinander insbesondere von einer Traufe (3) zum First (4) verlaufen, **dadurch gekennzeichnet, dass** in den Bereichen zwischen den Dachträgern (17) ein Druckschlauch (18) vorgesehen ist, welcher mit dem Membrandach verbunden oder in einer in dem Membrandach ausgebildeten Aufnahmetasche (19) angeordnet ist, um durch Beaufschlagung des Druckschlauchs (18) mit Druck das Membrandach zu spannen.

12. Bauwerk nach Anspruch 11, **dadurch gekennzeichnet, dass** es sich bei dem Druckschlauch (18) um einen Feuerwehrschlauch handelt, und/oder dass der Druckschlauch (18) parallel zu den Dachträgern (17) verläuft.

13. Bauwerk nach Anspruch 11 oder 12 und nach Anspruch 10, **dadurch gekennzeichnet, dass** die Gegenprofile (6) und der Druckschlauch (18) parallel zueinander verlaufen.

14. Bauwerk nach einem der Ansprüche 10 bis 13, **dadurch gekennzeichnet, dass** die Dachneigung mindestens 10° und/oder höchstens 30°, bevorzugt 18° beträgt, und/oder dass das Dach (2) als Membrandach ausgebildet ist und eine oder mehrere Membranlagen umfasst, und/oder dass es sich bei dem Bauwerk um eine Leichtbauhalle oder ein Zelt handelt, und/oder dass das Bauwerk mit einer Photovoltaikanlage (1) nach Anspruch 9 versehen ist.

15. Verfahren zum Anbringen eines Photovoltaikmoduls (9) nach einem der Ansprüche 1 bis 8 oder einer Photovoltaikanlage (1) nach Anspruch 9 an einem Bauwerk nach einem der Ansprüche 10 bis 14, wobei die Eingriffsprofile (12) des Photovoltaikmoduls (9) mit den Gegenprofilen (6) insbesondere formschlüssig in Eingriff gebracht werden und die Eingriffsprofile (12) des Photovoltaikmoduls (9) auf die Gegenprofile (6) aufgeschoben werden, um das Photovoltaikmodul (9) an dem Bauwerk zu halten, wobei, insbesondere, die Photovoltaikmodule (9) mittels eines Seilzugs und durch Umlenkung von der Traufe (3) Richtung First (4) gezogen werden und/oder wobei, insbesondere, die Photovoltaikmodule (9) in einer Endposition befestigt werden.
